# EUROPEAN PATENT APPLICATION

(11) **EP 3 324 119 A1**
(43) Date of publication of application: **23.05.2018**
(21) Application number: 17201674.3
(22) Date of filing: 14.11.2017
(51) Int. Cl.: F23N 1/00, F02C 9/40, F23N 5/24

(54) **SYSTEM AND METHOD FOR DETERMINING FUEL COMPOSITION FUEL USED IN GAS TURBINES**

(30) Priority: 22.11.2016 US 201615359605
(71) Applicant: General Electric Company, Schenectady, NY 12345 (US)
(72) Inventor: HARPER, James, Greenville, SC South Carolina 29615 (US); ARTHANARI, Akilezkrishnamurthy, 500081 Hyderabad, AP (IN)
(74) Representative: Lee, Brenda

(57) **Abstract**

A system is provided. The system includes a combustor assembly (14) that receives a fuel flow. The system includes a pressure sensor (48, 50) disposed within the combustor assembly (14) that measures a pressure of the fuel flow from a fuel supply (20) to a fuel nozzle (18) of the combustor assembly (14). The system includes a controller (40) communicatively coupled to the pressure sensor (48, 50). The controller (40) is configured to receive a pressure measurement from the pressure sensor (48, 50). The pressure measurement is a current operating parameter of the combustor assembly (14). The controller (40) is configured to determine a predicted fuel flow (110) based at least in part on the pressure measurement, determine a fuel composition factor (118) based on a comparison (116) of the predicted fuel flow (110) with a commanded fuel flow (112), and adjust control (120) of the combustor assembly (14) based on the fuel composition factor (118). The fuel composition factor (118) is indicative of a change in a fuel composition of the fuel flow.

## Description

### BACKGROUND OF THE INVENTION

The subject matter disclosed herein relates to gas turbine systems, and more particularly, to a system for determining a fuel composition for a gas turbine system.

Gas turbine systems typically include at least one gas turbine engine having a compressor, a combustor, and a turbine. The combustor may have one or more fuel nozzles for receiving and injecting fuel into a combustion chamber. Certain fuel gases may result in undesirable exhaust emissions, such as nitrogen oxides (NOx), sulfur oxides (SOx), carbon monoxide (CO), carbon dioxide (CO2), and so forth. In certain situations, the emission levels may exceed thresholds, such as minimum emission compliance levels, for gas turbine systems. Unfortunately, the specific composition of fuel supplied to the combustor may be unknown, thereby complicating controls to maintain the combustor within desired operating parameters.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a combustor assembly that receives a fuel flow. The system includes a pressure sensor disposed within the combustor assembly that measures a pressure of the fuel flow from a fuel supply to a fuel nozzle of the combustor assembly. The system includes a controller communicatively coupled to the pressure sensor. The controller is configured to receive a pressure measurement from the pressure sensor. The pressure measurement is a current operating parameter of the combustor assembly. The controller is configured to determine a predicted fuel flow based at least in part on the pressure measurement, determine a fuel composition factor based on a comparison of the predicted fuel flow with a commanded fuel flow, and adjust control of the combustor assembly based on the fuel composition factor. The fuel composition factor is indicative of a change in a fuel composition of the fuel flow.

In a second embodiment, a system includes a combustor assembly that receives a fuel flow and one or more sensors. The one or more sensors are disposed within the combustor assembly and are configured to measure one or more operating parameters of the combustor assembly. The system includes a controller communicatively coupled to each of the one or more sensors. The controller is configured to receive the one or more operating parameters from the one or more sensors, determine a predicted fuel flow based at least in part on the one or more operating parameters, determine a fuel composition factor based on a comparison of the predicted fuel flow with a commanded fuel flow, and adjust control of the combustor assembly based on the fuel composition factor. The fuel composition factor is indicative of a change in a fuel composition of the fuel flow.

In a third embodiment, a method includes receiving, via a controller of a combustor assembly, one or more operating parameters from one or more sensors disposed within a combustor assembly. The method also includes determining, via the controller, a predicted fuel flow based at least in part on the one or more operating parameters. The method also includes comparing the predicted fuel flow with a commanded fuel flow to determine a fuel composition factor and adjusting control of the combustor assembly based on the fuel composition factor. The fuel composition factor is indicative of a change in a fuel composition of a fuel flow from a fuel supply to a fuel nozzle of the combustor assembly.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic of an embodiment of a gas turbine system having a compressor, a turbine, a plurality of combustors, and a plurality of fuel nozzles;
FIG. 2 is a block diagram of an embodiment of a fuel composition determination system configured to determine a fuel composition of the fuel flow into a combustor of the gas turbine system of FIG. 1; and
FIG. 3 is a flow diagram of an exemplary method for adjusting control of the gas turbine system of FIG. 1, based in part on a fuel composition factor and the determined fuel composition.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments are directed towards systems and methods for determining a fuel composition of a fuel flow supplied to a gas turbine engine system. Specifically, the disclosed embodiments are directed to a fuel composition determination system that monitors fuel composition of a fuel flow based at least in part on a pressure measurement (taken via a pressure sensor) of the fuel supplied to the gas turbine engine system, rather than using other more complex or expensive measurement systems. For example, in contrast to the presently disclosed techniques, other systems may include various devices (e.g., calorimeter, wobbe meter, gas chromatographs, gas composition analyzers, etc.) to determine a fuel composition of fuel supplied to the gas turbine engine system. For example, in these other systems, various devices may measure a fuel composition of the fuel flow, and (if needed) various control adjustments may be made to the gas turbine engine system if the measured fuel composition is not expected to yield the desired operating parameters (e.g., desired combustion dynamics, the desired emissions, and so forth). However, it may be beneficial to provide for systems and methods for determining fuel composition of a fuel flow supplied to a gas turbine engine system with less costly devices and with greater efficiency.

The disclosed embodiments are directed to systems and methods for a fuel composition determination system that determines a change in fuel composition of a fuel flow supplied to a gas turbine engine system based at least in part on a fuel pressure measurement taken via at least one pressure sensor. Specifically, the fuel composition determination system may receive one or more fuel pressure measurements taken along a fuel line, in a fuel supply system, in the fuel nozzle, in the combustor, or any combination thereof. Further, in certain embodiments, the fuel composition determination system may receive additional information, such as a fuel temperature measurement and/or various gas turbine operating conditions (e.g., compressor discharge pressure, compressor discharge temperature, a combustion flame or a firing temperature (e.g., peak firing temperature, a combustion flame pressure such as a peak firing pressure, vibration frequency, vibration amplitude, acoustic frequency, acoustic amplitude, etc.)), various combustion dynamics measurements, power output, emissions levels, etc.). In certain embodiments, the fuel composition determination system may utilize the received information (e.g., the fuel pressure measurement, the fuel temperature measurement, and/or various gas turbine operating conditions) to determine a predicted fuel flow for a reference fuel composition type. In other words, a reference fuel type may be utilized by the fuel composition determination system to determine predicted fuel flows supplied to the gas turbine engine system. In certain embodiments, the fuel composition determination system may receive a commanded fuel flow, and may compare the commanded fuel flow with the predicted fuel flow to determine a fuel composition factor. In certain embodiments, the fuel composition factor may be utilized to determine various control adjustments that may be implemented by a controller (e.g., electronic controller with a processor, memory, and instructions) of the system. For example, in certain situations, the controller may control the gas turbine system such that the overall system yields the desired combustion dynamics or the desired emissions, or may control the gas turbine system so that various hardware life may be protected. In certain situations, the controller may control the gas turbine system to regulate and control other types of operating parameters. In this manner, the fuel composition determination system may monitor and/or determine changes in a fuel composition of the fuel flow, thereby monitoring and/or controlling changes in the fuel composition in a cost-effective and efficient manner.

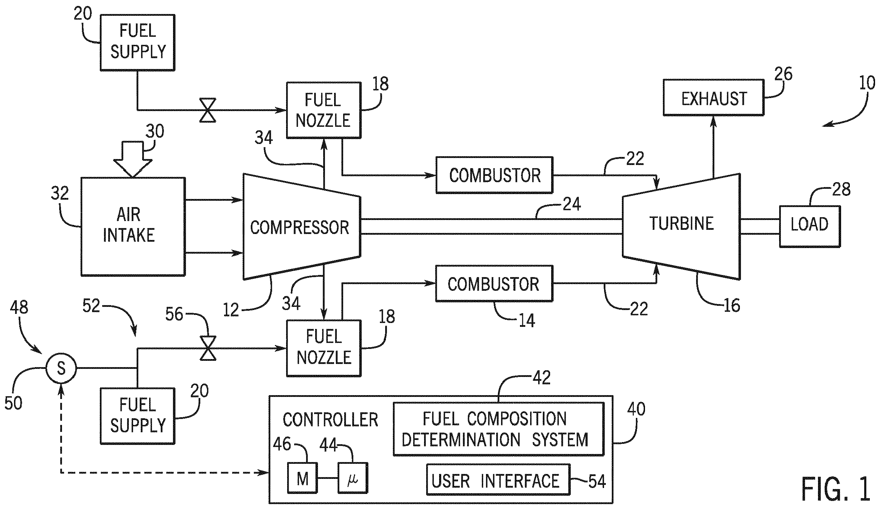

Turning now to the drawings, FIG. 1 illustrates a block diagram of an embodiment of a gas turbine system 10. The gas turbine system 10 includes a compressor 12, turbine combustors 14, and a turbine 16. The turbine combustors 14 includes fuel nozzles 18 which receive and route a fuel 20 (e.g., gas and/or liquid fuel) into the turbine combustors 14. The fuel 20 may be a gas fuel (e.g., natural gas), and/or a blended fuel (e.g., a mixture of natural gas and process gas). For example, the process gas may include a blast furnace gas, a coke oven gas, a refinery flue gas, a synthetic gas generated as a result of a refinery, chemical process, gasification process, or a combination thereof. As a further example, the fuel 20 may include gases (e.g., natural gas, LNG, LPG, refinery gas, coal gas, hydrogen gas), liquids (e.g., diesel, kerosene, naptha, ethanol, methanol, crude oils), or any other suitable fuel source.

In certain embodiments, the turbine combustors 14 ignite and combust an oxidant-fuel mixture (e.g., an air-fuel mixture), and then pass resulting hot pressurized combustion gases 22 (e.g., exhaust) into the turbine 16. Turbine blades within the turbine 16 are coupled to a shaft 24 of the gas turbine system 10, which may also be coupled to several other components throughout the turbine system 10. As the combustion gases 22 flow against and between the turbine blades of the turbine 16, the turbine 16 is driven into rotation, which causes the shaft 24 to rotate. Eventually, the combustion gases 22 exit the turbine system 10 via an exhaust outlet 26. Further, in the illustrated embodiment, the shaft 24 is coupled to a load 28, which is powered via the rotation of the shaft 24. The load 28 may be any suitable device that generates power via the rotational output of the turbine system 10, such as an electrical generator, a propeller of an airplane, or other load.

The compressor 12 of the gas turbine system 10 includes compressor blades. The compressor blades within the compressor 12 are coupled to the shaft 24, and will rotate as the shaft 24 is driven to rotate by the turbine 16, as discussed above. As the compressor blades rotate within the compressor 12, the compressor 12 compresses air (or any suitable oxidant 30) received from an air intake 32 to produce pressurized air 34. The pressurized air 34 is then fed into the fuel nozzles 18 of the combustors 14. As mentioned above, the fuel nozzles 18 (e.g., premix fuel nozzles) mix the pressurized air 34 and the fuel 20 to produce a suitable mixture ratio for combustion, e.g., a combustion that causes the fuel to more completely burn, so as not to waste fuel or cause excess emissions. In some embodiments, the fuel nozzles 18 (e.g., diffusion fuel nozzles) may not pre-mix the fuel 20 and air 34, and thus may be configured to produce a diffusion flame.

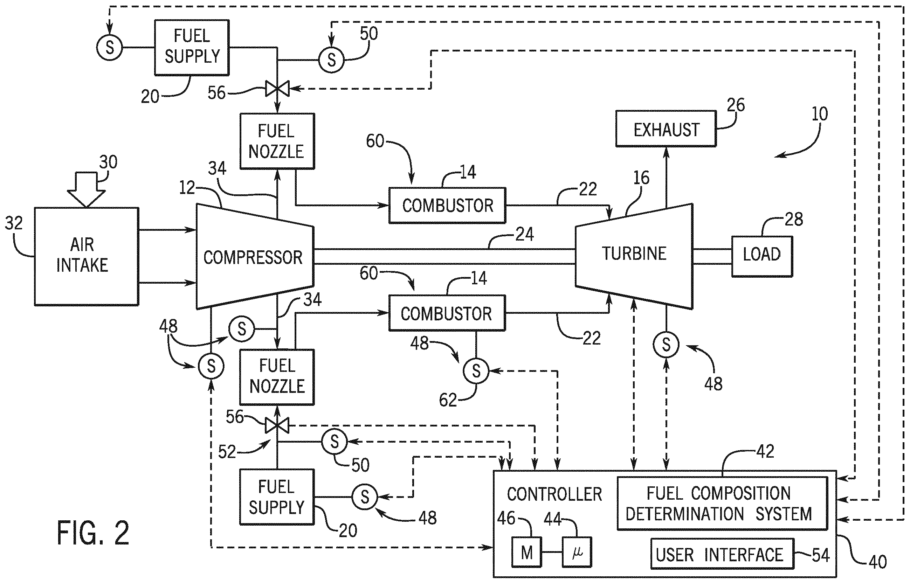

In certain embodiments, the gas turbine system 10 includes a controller 40 comprising a fuel composition determination system 42 (or fuel composition determination circuitry 42). Specifically, the controller 40 may include a processor 44 coupled to a memory 46, and may be communicatively coupled to components of the gas turbine system 10. The processor 44 may be configured to execute instructions stored on the memory 46 to carry out monitoring and/or control operations of the gas turbine system 10. The memory 46 may be configured to store instructions that are loadable and executable on the processor 44. In certain embodiments, the memory 46 may be configured to store information related to a physical arrangement or configuration of the system 10, as further described with respect to FIG. 2. In certain embodiments, the memory 46 may be volatile (such as random access memory (RAM)) and/or nonvolatile (such as read-only memory (ROM), flash memory, etc.). The controller 40 may also include additional removable storage and/or non-removable storage including, but not limited to, magnetic storage, optical disks, and/or tape storage. In some implementations, the memory 46 may include multiple different types of memory, such as static random access memory (SRAM), dynamic random access memory (DRAM), or ROM.

In certain embodiments, the controller 40 may receive information from one or more sensors 48 disposed within the system 10, which maybe utilized to measure operating parameters of the system 10 (e.g., pressures, temperatures, flow rates, combustion dynamics, etc.). For example, the system 10 may include a pressure sensor 50 disposed along fuel flow line 52 between the fuel supply 20 and the fuel nozzle 18. In other embodiments, sensors 48 may be placed in other locations, such as upstream within the fuel supply, downstream within the combustors 14, the fuel nozzles 18, the valves, etc. The pressure sensor 50 may be communicatively coupled to the controller 40, and may provide a fuel pressure of the fuel flow to the combustors 14, which may be utilized by the fuel composition determination system 42 to determine changes in fuel composition of the fuel 20, as further described with respect to FIG. 2. Further, the controller 40 may receive operator input from a user (via a user interface 48), and may utilize the received inputs to generate operating commands for adjusting operating conditions of the system 10, adjust a rate of fuel flow along the fuel line 52, and so forth.

In particular, in certain embodiments, the fuel composition determination system 42 may be configured to monitor a fuel composition of the fuel 20 supplied to the combustors 14, and may determine changes in the fuel composition during operation of the gas turbine 16 that may affect the operation of the system 10. For example, in certain situations, changes in the fuel composition may lead to changes in combustion dynamics and/or emissions of the gas turbine system 10. In certain embodiments, the fuel composition determination system 42 may determine one or more changes in a fuel composition based at least in part on a fuel pressure of the fuel 20 provided to the combustors 14. As a further example, the fuel composition determination system 42 may utilize the fuel pressure, the fuel temperature, and/or various gas turbine operating conditions (e.g., compressor discharge pressure, compressor discharge temperature, a firing temperature, various combustion dynamics measurements, etc.), to monitor and/or determine changes in a fuel composition of the fuel flow, as further described below.

For example, in certain embodiments, the fuel composition determination system 42 may utilize information from existing fuel pressure sensors 50 (e.g., one or more) to determine changes in fuel composition of the fuel flow. As a further example, in certain embodiments, the fuel composition determination system 42 may utilize information from fuel pressure sensors 50 retrofitted within the system 10 to determine changes in fuel composition of the fuel flow. Indeed, in certain situations, the system 10 may be retrofitted with one or more sensors 48 (e.g., fuel pressure sensors 50) and/or the fuel composition determination system 42 in order to determine changes in fuel composition in a cost-effective manner.

FIG. 2 is a block diagram of an embodiment of the fuel composition determination system 42 of FIG. 1, which is configured to monitor and/or determine changes in fuel composition of the fuel 20 supplied to the combustors 14 of the gas turbine system 10. Specifically, as noted above, the combustors 14 receive the fuel 20, combust the fuel 20 with the pressurized air 34 from the compressor 12 with the fuel 20, and route the generated combustion gases 22 into the turbine 16. The fuel 20 supplied to the combustors 14 may be a natural gas, a process gas, and/or a mixture of natural gas and process gas. For example, the process gas may include a blast furnace gas, a coke oven gas, a refinery flue gas, any synthetic gas generated as a result of a refinery, chemical process, gasification process, or a combination thereof. Indeed, the fuel 20 may include any type of gases (e.g., natural gas, LNG, LPG, refinery gas, coal gas, hydrogen gas), inert gases, liquids (e.g., diesel, kerosene, naptha, ethanol, methanol, crude oils), may be other suitable fuel source, or may include any mixture or composition of gases.

In certain situations, the composition of the fuel 20 supplied to the combustors 14 may change during operation of the gas turbine system 10. For example, during operation of the gas turbine system 10, the fuel 20 may have an increased or a decreased quantity of inert gas (e.g., nitrogen), which may cause changes in the heating value of the fuel 20. As a further example, in certain situations, pipeline gas may vary in fuel composition or the fuel composition may vary when a tank is changed. Indeed, in certain situations, changes in the fuel composition of the fuel 20 may cause deviations from the desired operating parameters of the system 10. For example, in certain situations, changes in the fuel composition of the fuel 20 may lead to deviations from the desired combustion dynamics and/or the desired emissions for the gas turbine system 10. As a further example, changes in the fuel composition of the fuel 20 may cause premature wear or potential damage to certain hardware components of the system 10. Accordingly, it may be desirable to provide for systems and methods that monitor changes in fuel composition and/or adjust control of the gas turbine system 10 based on the changes in the fuel composition. In particular, it may be beneficial to provide for systems and methods that monitor or determine changes in the fuel composition in a cost-effective and efficient manner, and without expensive or complex devices.

With the forgoing in mind, the disclosed embodiments are directed to utilizing the fuel composition determination system 42 of the controller 40 to monitor and/or determine changes in fuel composition of the fuel 20 supplied to the combustors 14. For example, in certain embodiments, the fuel composition determination system 42 may be configured to determine changes in the chemical composition of the fuel 20 and/or determine changes in a concentration of the different components of the fuel 20 (e.g., changes in an amount of inert gases such as nitrogen, carbon dioxide, acid gases such as hydrogen sulfide, oxygen, water content or moisture, particulate matter, etc.) based at least in part on information received from one or more sensors 48 disposed through the system 10. Based on the determined changes in the fuel composition (if any) of the fuel 20, the controller 40 may adjust control of the gas turbine system 10 to maintain or regulate the operation of the gas turbine system 10 within desired operating parameters or boundaries.

In certain embodiments, the fuel composition determination system 42 may receive operating feedback related to operating parameters (e.g., current operating parameters) of the gas turbine system 10 via one or more sensors 48 disposed throughout the system 10. For example, the sensors 48 may include various pressure or temperature sensors (e.g., the pressure sensor 50) that measure and transmit various operating parameters (e.g., temperature, pressure, and so forth) of the fuel 20 along the fuel line 52 to the controller 40. In certain embodiments, the sensors 48 may measure information related to combustion dynamics (e.g., combustion dynamics parameter) from within a combustion zone 60 of each combustor 14. For example, a sensor 62 of each combustor 14 may be a flame detector or an acoustic probe, and may measure a flame intensity of a flame, a frequency, or an amplitude of a tone within the combustor 14. In certain embodiments, the sensors 48 may measure information related to the turbine 16 and/or the compressor 12. For example, the sensor 48 may measure information related to a temperature or a pressure of the pressurized air 34 discharged from the compressor 12, or the temperature or pressure of the combustion gases 22 supplied to the turbine 16. In certain embodiments, the sensors 48 may include other types of sensors, such as, for example, optical sensors, mechanical sensors, vibration sensors, electrical sensors, or any sensor that may measure other useful operating parameters of the gas turbine system 10. In particular, the sensors 48 may send measured information related to the operating parameters to the controller 40, which may then use the measured information to determine changes within the fuel composition of the fuel 20 supplied to the combustors 14.

In certain embodiments, the fuel composition determination system 42 of the controller 40 may utilize information stored within the memory 46 and/or received via user input to determine changes within the fuel composition of the fuel 20 supplied to the combustors 14. For example, in certain embodiments, the memory 42 may store information related to the geometry or arrangement of the combustors 14 within the gas turbine system 10. As a further example, the memory 42 may store information related to the number, location, geometry, arrangement, or type of the fuel nozzles 18 and/or the number of type of fuel circuits. As a further example, the memory 42 may store information related to the geometry of the fuel lines 52, such as a diameter, a length, or a width of the fuel lines 52 routing the fuel 20 to the fuel nozzles 18. As a further example, the memory 42 may store information related to geometry or arrangement of any physical configuration of components within the gas turbine system 10. In certain embodiments, information related to the geometry or arrangement of components within the gas turbine system 10 may be accessed from the memory 46 (or received via user input) and utilized by the fuel composition determination system 42 to determine changes within the fuel composition of the fuel 20 supplied to the combustors 14.

In certain embodiments, the fuel composition determination system 42 may utilize the operating feedback (e.g., information received from the sensors 48) and/or information accessed from the memory 46 (or received via user input) to determine a predicted fuel flow. Specifically, the fuel composition determination system 42 may receive a fuel pressure measurement, a fuel temperature measurement and/or various gas turbine operating conditions (e.g., compressor discharge pressure, compressor discharge temperature, a firing temperature, various combustion dynamics measurements, etc.), as noted above. Further, the fuel composition determination system 42 may receive information related to the geometry/arrangement of components within the gas turbine system 10 (e.g., fuel lines 52), as noted above. In certain embodiments, the fuel composition determination system 42 may utilize this information in compressible flow calculations to determine a predicted fuel flow in the fuel line 52 for a reference fuel type. The predicted fuel flow may be the rate of fuel flow for a reference fuel type having a particular composition, for a particular set of operating parameters in a gas turbine system.

In certain embodiments, the fuel composition determination system 42 may compare the predicted fuel flow with a commanded fuel flow. The commanded fuel flow may be the fuel flow commanded to the combustors 14, the fuel supply, the fuel nozzles, and so forth, by the controller 40. In certain embodiments, the commanded fuel flow may be the initial set point of fuel flow that is commanded to a valve 56 configured to route the fuel 20 to the fuel nozzle 18 along the fuel line 52. In certain embodiments, the commanded fuel flow may be the previously commanded fuel flow that is commanded to the valve 56 along the fuel line 52. In particular, the commanded fuel flow may vary based in part on the dimensions of the fuel line 52, the pressure or the temperature of the fuel 20 in the fuel line 52, the flow rate of the fuel 20, and/or the composition of the fuel 20. In certain embodiments, based on the comparison between the commanded fuel flow and the predicted fuel flow, the fuel composition determination system 42 may determine a fuel composition factor.

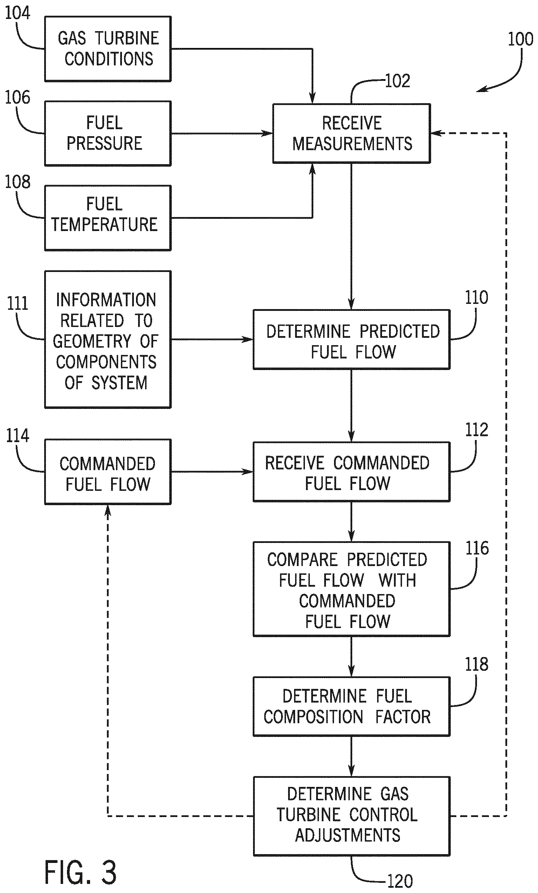

The fuel composition factor may be a value (e.g., a ratio) that is indicative of a change (if any) in the composition of the fuel 20 supplied to the combustors 14, as further described with respect to FIG. 3. In certain embodiments, the fuel composition factor may be determined based on lookup tables (e.g., pressure and other operational parameters corresponding to fuel composition), computer models, knowledge based data, empirical data, etc. In certain embodiments, the fuel composition factor may be determined based on previously determined knowledge. For example, to determine the correlations between a reference fuel and the operating parameters, the system 10 may be run at various operating conditions for the reference fuel (a particular fuel), and various information may be recorded based on the determined correlations. Further, the controller 40 may model or simulate the data, and/or may determine, estimate, or extrapolate the fuel composition factor based on the modeled data. In certain embodiments, based on the change (if any) in the composition of the fuel 20, the controller 40 may adjust control of the gas turbine system 10 to maintain or regulate the desired operating parameters or boundaries of the system 10, as further described with respect to FIG. 3.

In this manner, the controller 40 may regulate a feedback control loop for monitoring and/or adjusting control of the gas turbine system 10 based on changes in the fuel composition of the fuel 20 supplied to the combustors 14. Specifically, the controller 40 may monitor and control the gas turbine system 10 during operation of the gas turbine system 10, thereby providing dynamic control of the system 10 in view of changes (if any) to the composition of the fuel 20 provided to the combustors 14.

FIG. 3 is a flow diagram of an exemplary method 100 for adjusting control of the gas turbine system 10 of FIG. 1, based in part on a fuel composition factor determined based on a comparison of the predicted fuel flow to the commanded fuel flow. In the illustrated embodiment, the controller 40 may perform the described operation of the method 100. In certain embodiments, the fuel composition determination system 42 of the controller 40 may receive operating feedback (e.g., sensor measurements) from the gas turbine system 10 via one or more sensors 48 (block 102). For example, the fuel composition determination system 42 may receive gas turbine conditions from sensors 48 associated with the turbine 16 and/or the compressor 12 (block 104). Examples of various gas turbine conditions include, but are not limited to, compressor discharge pressure, compressor discharge temperature, a firing temperature, various combustion dynamics measurements, and so forth. As a further example, the fuel composition determination system 42 may receive a fuel pressure measurement from the pressure sensor 50 disposed along the fuel line 52 between the fuel supply 20 and the fuel nozzle 18 (block 106). As a further example, the fuel composition determination system 42 may receive a fuel temperature measurement from the sensors 48 disposed along the fuel line 52 between the fuel supply 20 and the fuel nozzle 18 (block 108).

In certain embodiments, the fuel composition determination system 42 of the controller 40 may receive via user input (or access from the memory 46) information related to a geometry or arrangement of components within the system 10 (block 111). For example, the fuel composition determination system 42 may utilize this information in combination with the operating feedback to determine a predicted fuel flow (block 110). In particular, the predicted fuel flow may be determined for a reference fuel having a particular known composition of gases. Indeed, the controller 40 may utilize the received information to accurately determine a predicted fuel flow customized to the arrangement of the fuel circuits, the geometry of the fuel lines 52 (e.g., diameter, length, width, etc.), the pressures and temperatures of the fuel flow, the type and composition of fuel 20, etc.

In certain embodiments, the method 100 includes the fuel composition determination system 42 of the controller 40 comparing the predicted fuel flow to a commanded fuel flow (block 116). In certain embodiments, the commanded fuel flow may be based on information received from the valve 56 configured to route an amount of fuel 20 to the fuel nozzle 18. In certain embodiments, the commanded fuel flow may be desired fuel flow commanded to the valve 56 as an initial set value for the system 10 and/or as a previous commanded value provided to the system 10.

In certain embodiments, based on the comparison of the commanded fuel flow and the predicted fuel flow, the fuel composition determination system 42 may be configured to determine a fuel composition factor (block 118). In particular, the fuel composition determination factor may be a value (e.g., ratio) that is indicative of changes in the fuel composition of the fuel 20 during operation of the system 10. Particularly, a comparison between the commanded fuel flow and the predicted fuel flow may result in a change in fuel flow that may be indicative of a change in the heating value of the fuel, which in turn may be indicative of a change in the fuel composition of the fuel 20. In certain embodiments, the comparison may result in a change in fuel flow that may be indicative of a change in energy content of the fuel 20, which may in turn be indicative of a change in the fuel composition of the fuel 20. Accordingly, the fuel composition factor may be indicative of a change in the fuel composition of the fuel 20 during operation of the system 10.

In certain embodiments, the controller 40 may be configured to adjust control of the gas turbine system 10 based on the determined fuel composition factor (block 120). Specifically, based on the fuel composition factor, the controller 40 may determine the type of change in fuel composition of the fuel 20. For example, in certain situations, the fuel composition factor may be indicative of a greater quantity of inert gas (e.g., nitrogen) within the fuel 20 supplied to the combustors 14. Accordingly, based on the fuel composition factor, the controller 40 may adjust control commands to the system 10 to maintain the operating parameters of the system 10 within certain boundaries. For example, in certain situations, the controller 40 may adjust control commands so that the system 10 yields the desired combustion dynamics, the desired emissions, protects certain hardware components, and/or yields other desired operating parameters of the system 10. For example, in certain embodiments, the controller 40 may increase or decrease the load 28, may adjust the fuel 20 supplied to each combustor 14, each fuel circuit, and/or to each fuel nozzle 18 (e.g., adjust a fuel split), may sound an alarm to alert an operator, or may adjust one or more operating parameters of the system 10 (e.g., combustion dynamics parameters, etc.).

Technical effects of the invention include systems and methods for the fuel composition determination system 42 that determines a change in fuel composition of the fuel 20 supplied to the gas turbine engine system 10 based at least in part on a fuel pressure measurement taken via a pressure sensor 50. More specifically, the fuel composition determination system 42 may receive and utilize a fuel pressure, a fuel temperature, and/or various gas turbine operating conditions (e.g., compressor discharge pressure, compressor discharge temperature, a firing temperature, various combustion dynamics measurements, etc.), and various geometry arrangement information of the components of the system 10 monitor and regulate changes in the fuel composition of the fuel 20. In certain embodiments, the fuel composition determination system 42 may utilize the received information to determine a predicted fuel flow for a reference fuel composition type. Further, the composition determination system 42 may determine a fuel composition factor based on a comparison of the predicted fuel flow to a commanded fuel flow. In certain embodiments, the fuel composition factor may be indicative of a change in the composition of the fuel 20 during operation of the system 10, and maybe utilized by the controller 40 to determine control adjustments (if any) for the system 10.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a combustor assembly configured to receive a fuel flow;
   a pressure sensor disposed within the combustor assembly and configured to measure a pressure of the fuel flow from a fuel supply to a fuel nozzle of the combustor assembly; and
   a controller communicatively coupled to the pressure sensor, wherein the controller is configured to:
      receive a pressure measurement from the pressure sensor, wherein the pressure measurement is a current operating parameter of the combustor assembly;
      determine a predicted fuel flow based at least in part on the pressure measurement;
      determine a fuel composition factor based on a comparison of the predicted fuel flow with a commanded fuel flow, wherein the fuel composition factor is indicative of a change in a fuel composition of the fuel flow; and
      adjust control of the combustor assembly based on the fuel composition factor.
2. The system of clause 1, comprising one or more sensors disposed within the combustor assembly and configured to measure one or more current operating parameters.
3. The system of clause 1 or 2, wherein the one or more sensors comprise a temperature sensor, a flow rate sensor, a flame detector, an acoustic probe, a mechanical sensor, a vibration sensor, an optical sensor, an electrical sensor, or a combination thereof.
4. The system of any preceding clause, wherein the controller is configured to determine the predicted fuel flow based at least in part on a temperature measurement, a compressor discharge pressure, or a compressor discharge temperature.
5. The system of any preceding clause, wherein the controller is configured to determine the predicted fuel flow based at least in part on a geometry of components arranged in the combustor assembly.
6. The system of any preceding clause, wherein the geometry of the components comprises a diameter and a length of the fuel line.
7. The system of any preceding clause, wherein the controller is configured to determine the predicted fuel flow based on compressible flow calculations.
8. The system of any preceding clause, wherein the controller is configured to receive the commanded fuel flow from a valve disposed upstream of the fuel nozzle, and wherein the valve controls a rate of the fuel flow.
9. The system of any preceding clause, wherein adjusting the control of the combustor assembly comprises adjusting a fuel flow, a fuel split, a combustion dynamics parameter, an emissions parameter, or a load.
10. A system, comprising:
   a combustor assembly configured to receive a fuel flow;
   one or more sensors disposed within the combustor assembly and configured to measure one or more operating parameters of the combustor assembly; and
   a controller communicatively coupled to each of the one or more sensors,
   wherein the controller is configured to:
   receive the one or more operating parameters from the one or more sensors;
   determine a predicted fuel flow based at least in part on the one or more operating parameters;
   determine a fuel composition factor based on a comparison of the predicted fuel flow with a commanded fuel flow, wherein the fuel composition factor is indicative of a change in a fuel composition of the fuel flow; and
   adjust control of the combustor assembly based on the fuel composition factor.
11. The system of any preceding clause, wherein the one or more sensors comprises a pressure sensor configured to measure a pressure of the fuel flow from a fuel supply to a fuel nozzle of the combustor assembly.
12. The system of any preceding clause, wherein the one or more sensors comprises a temperature sensor configured to measure a temperature of the fuel flow from a fuel supply to a fuel nozzle of the combustor assembly.
13. The system of any preceding clause, wherein the one or more operating parameters comprises a compressor discharge pressure or a compressor discharge temperature.
14. The system of any preceding clause, wherein the controller is configured to determine the predicted fuel flow based at least in part on a geometry of components arranged within the combustor assembly.
15. The system of any preceding clause, wherein the controller is configured to receive the commanded fuel flow from a valve disposed upstream of the fuel nozzle, and wherein the valve controls a rate of the fuel flow.
16. The system of any preceding clause, wherein adjusting the control of the combustor assembly comprises adjusting the fuel flow, a fuel split, a combustion dynamics parameter, an emissions parameter, or a load.
17. A method, comprising:
   receive, via a controller of a combustor assembly, one or more operating parameters from one or more sensors disposed within a combustor assembly;
   determine, via the controller, a predicted fuel flow based at least in part on the one or more operating parameters;
   compare the predicted fuel flow with a commanded fuel flow to determine a fuel composition factor, wherein the fuel composition factor is indicative of a change in a fuel composition of a fuel flow from a fuel supply to a fuel nozzle of the combustor assembly; and
   adjust control of the combustor assembly based on the fuel composition factor.
18. The method of any preceding clause, comprising determining the predicted fuel flow for a reference fuel based at least in part on the one or more operating parameters.
19. The method of any preceding clause, comprising determining the predicted fuel flow based at least in part on a geometry of components of the combustor assembly.
20. The method of any preceding clause, wherein adjusting control of the combustor assembly comprises adjusting the fuel flow, a fuel split, a combustion dynamics parameter, an emissions parameter, or a load.

## Claims

1. A system, comprising:
a combustor assembly (14) configured to receive a fuel flow;
one or more sensors (48) disposed within the combustor assembly (14) and configured to measure one or more operating parameters (102) of the combustor assembly (14); and
a controller (40) communicatively coupled to each of the one or more sensors (48), wherein the controller (40) is configured to:
receive the one or more operating parameters (102) from the one or more sensors (48);
determine a predicted fuel flow (110) based at least in part on the one or more operating parameters (102);
determine a fuel composition factor (118) based on a comparison (116) of the predicted fuel flow (110) with a commanded fuel flow (112), wherein the fuel composition factor (118) is indicative of a change in a fuel composition of the fuel flow; and
adjust control (120) of the combustor assembly (14) based on the fuel composition factor (118).

2. The system of claim 1, wherein the one or more sensors (48) comprises a pressure sensor (48, 50) configured to measure a pressure of the fuel flow from a fuel supply (20) to a fuel nozzle (18) of the combustor assembly (14).

3. The system of claim 1, wherein the one or more sensors (48) comprises a temperature sensor (48) configured to measure a temperature of the fuel flow from a fuel supply (20) to a fuel nozzle (18) of the combustor assembly (14).

4. The system of claim 1, 2 or 3, wherein the one or more operating parameters (102) comprises a compressor discharge pressure or a compressor discharge temperature.

5. The system of any preceding claim, wherein the controller (40) is configured to determine the predicted fuel flow (110) based at least in part on a geometry of components arranged within the combustor assembly (14).

6. The system of any preceding claim, wherein the controller (40) is configured to receive the commanded fuel flow (112) from a valve disposed upstream of the fuel nozzle (18), and wherein the valve controls a rate of the fuel flow.

7. The system of any preceding claim, wherein the controller (40) is configured to adjust the control (120) of the combustor assembly (14) by adjusting the fuel flow, a fuel split, a combustion dynamics parameter, an emissions parameter, or a load.

8. A method, comprising:
receive, via a controller (40) of a combustor assembly (14), one or more operating parameters (102) from one or more sensors (48) disposed within a combustor assembly (14);
determine, via the controller (40), a predicted fuel flow (110) based at least in part on the one or more operating parameters (102);
compare the predicted fuel flow (110) with a commanded fuel flow (112) to determine a fuel composition factor (118), wherein the fuel composition factor (118) is indicative of a change in a fuel composition of a fuel flow from a fuel supply (20) to a fuel nozzle (18) of the combustor assembly (14); and
adjust control (120) of the combustor assembly (14) based on the fuel composition factor (118).

9. The method of claim 8, comprising determining the predicted fuel flow (110) for a reference fuel based at least in part on the one or more operating parameters (102).

10. The method of claim 9, comprising determining the predicted fuel flow (110) based at least in part on a geometry of components of the combustor assembly (14).

11. The method of claim 8 9 or 10, wherein adjusting control (120) of the combustor assembly (14) comprises adjusting the fuel flow, a fuel split, a combustion dynamics parameter, an emissions parameter, or a load.

12. The method of any of claims 8 to 11, wherein the one or more sensors (48) comprises a pressure sensor (48, 50), and the one or more operating parameters (102) comprise a pressure of the fuel flow from the fuel supply (20) to the fuel nozzle (18) of the combustor assembly (14).
